Europäisches Patentamt

European Patent Office

Office européen des brevets

(19)

(11) Publication number: **0 077 692**

**B1**

(12) **EUROPEAN PATENT SPECIFICATION**

(45) Date of publication of patent specification: **25.01.89**

(51) Int. Cl.⁴: **G 11 B 27/02**

(21) Application number: **82305583.5**

(22) Date of filing: **20.10.82**

(54) **Editing control methods and apparatus for video tape recorders.**

(30) Priority: **20.10.81 JP 167670/81**

(43) Date of publication of application:
**27.04.83 Bulletin 83/17**

(45) Publication of the grant of the patent:
**25.01.89 Bulletin 89/04**

(84) Designated Contracting States:
**AT DE FR GB NL**

(56) References cited:
**AT-B- 364 176**
**FR-A-2 339 306**
**GB-A-1 387 286**
**GB-A-2 060 203**
**US-A-4 272 790**
**US-A-4 283 745**
**JOURNAL OF THE SMPTE, vol. 79, no. 3, March 1970, pages 197-202, Scarsdale, N.Y., US; K.P. DAVIES: "A versatile system for the automation of video-tape editing"**
**SMPTE JOURNAL, vol. 88, no. 7, July 1979, pages 483-485, Scarsdale, N.Y., US; G.R. SWETLAND: "A new system for synchronizing magnetic tape and magnetic film transports for television post production"**

(73) Proprietor: **SONY CORPORATION**
**7-35 Kitashinagawa 6-Chome Shinagawa-ku Tokyo 141 (JP)**

(72) Inventor: **Ishiguro, Mamoru**
**3-1-2-403 Tobio**
**Atsugi-shi Kanagawa-ken (JP)**
Inventor: **Matsuyama, Atsuo**
**1115-247 Kamiogino**
**Atsugi-shi Kanagawa-ken (JP)**
Inventor: **Yamamura, Kazumasa**
**208-7 Tomuro**
**Atsugi-shi Kanagawa-ken (JP)**

(74) Representative: **Thomas, Christopher Hugo et al**
**D Young & Co 10 Staple Inn**
**London WC1V 7RD (GB)**

(56) References cited:
**SMPTE JOURNAL, vol. 87, no. 6, June 1978, pages 379-382, Scarsdale, N.Y., US; K.J. HAMALAINEN: "Videotape editing systems using microprocessors"**

EP 0 077 692 B1

## Description

This invention relates to editing control methods and apparatus for video tape recorders (VTRs). The invention is particularly concerned with accurate prerolling of video tapes prior to editing.

In the editing of a video tape, a portion of the tape to be edited has recorded thereon video information from another video source. The other video source can, for example, be a video camera or another video tape. When the source of the video information is a video signal recorded on another tape, one video tape recording and/or reproducing apparatus is required for each tape in order to produce an edited video tape.

When two video tapes are used in editing, they must be accurately positioned at respective preroll points, that is, points on the tapes located before the editing start or edit in points. After the tapes have been positioned at the respective preroll points, the tapes are advanced in synchronism until the edit in points are reached and the actual editing operation begins.

In order to operate two video tape recording and/or reproducing apparatuses in synchronism, two types of signals recorded on the video tapes have been utilized. One type of signal is a time code signal such as the Society of Motion Picture and Television Engineers (SMPTE) or European Broadcasting Union (EBU) time code signal. Alternatively, control signals associated with the video tracks recorded on the tapes have been used for synchronization.

The use of control signals to synchronize the tapes involves significant difficulties. So long as the tapes are moving, synchronization of the tapes can be detected quite accurately. However, when the direction of tape travel is changed, or pinch rollers used in driving the tape are intermittently engaged therewith so that the tape is not continuously advanced, the control signals cannot be accurately detected, and, accordingly, it cannot be determined whether two tapes are operating in synchronism.

When time code signals are utilized to synchronize the editing of two tapes, a unique address location on each tape can be detected even when the tape is at rest. However, time code signals are generally placed on the tape during the recording process, and are consecutively numbered. If the tape has been stopped, for example, during recording, the time code signals recorded on the tape are not consecutive. Thus, upon playback, precise time differences between the two tapes cannot be detected accurately, making it difficult to synchronize the tapes accurately.

US patent specification US—A—4 283 745 discloses editing methods and apparatus in accordance with the pre-characterizing parts of claims 1 and 15.

According to the present invention there is provided an editing control apparatus for use with first and second video tape recording and/or reproducing apparatuses, each employing a video tape having time code signals and control signals recorded thereon, and which is advanced at a predetermined forward speed for recording and reproducing video signals thereon, the apparatus comprising:

time code reading means for reading said time code signals on said video tapes;

control signal reading means for reading said control signals on said video tapes; and

controller means for controlling said video tape recording and/or reproducing apparatuses in response to said time code signals and said control signals, and for positioning said video tapes at respective preroll points which are located a predetermined number of frames from respective edit in points;

characterized in that:

said controller means positions said video tapes at said respective preroll points by rewinding said video tapes at a first speed substantially greater than said predetermined forward speed to first predetermined points located between said edit in points and said preroll points, and thereafter further rewinding the respective video tapes at a second speed substantially less than said predetermined forward speed to said respective preroll points; and in that said controller means presets control signal counter means with a predetermined number for establishing said first predetermined points when said video tapes pass through said edit in points during said rewinding.

According to the present invention there is also provided a method of operating first and second video tape recording and/or reproducing apparatuses to edit video tapes employed therewith and having time code signals and control signals recorded thereon, and in which each of said tapes is advanced at a predetermined forward speed for recording and reproducing video signals thereon, the method comprising the steps of:

reading said time code signals on said video tapes;

reading said control signals on said video tapes;

controlling said video tapes recording and/or reproducing apparatuses in response to said time code signals and said control signals; and

positioning said video tapes at respective preroll points, which are located a predetermined number of frames from respective edit in points;

characterized by:

rewinding said video tapes to first predetermined points located between said edit in points and said preroll points at a first speed substantially greater than said predetermined forward speed; and thereafter:

further rewinding said video tapes at a second speed substantially less than said predetermined forward speed to respective preroll points in response to said time code signals and said control signals; and

presetting control signal counter means with a predetermined number for establishing said first predetermined points when said video tapes pass through said edit in points during said rewinding.

The invention will now be described by way of example with reference to the accompanying drawings, in which:

Figure 1 is a block diagram of an embodiment of editing control apparatus in accordance with the invention for use with video tape recording and/or reproducing apparatus;

Figure 2 is a block diagram of portions of a random access memory used in the embodiment of Figure 1;

Figures 3A to 3E are flow charts illustrating the operation of the editing control apparatus of Figure 1; and

Figure 4 is a graph illustrating the relationship between tape length and time when a video tape is rewound to a preroll point located on the video tape.

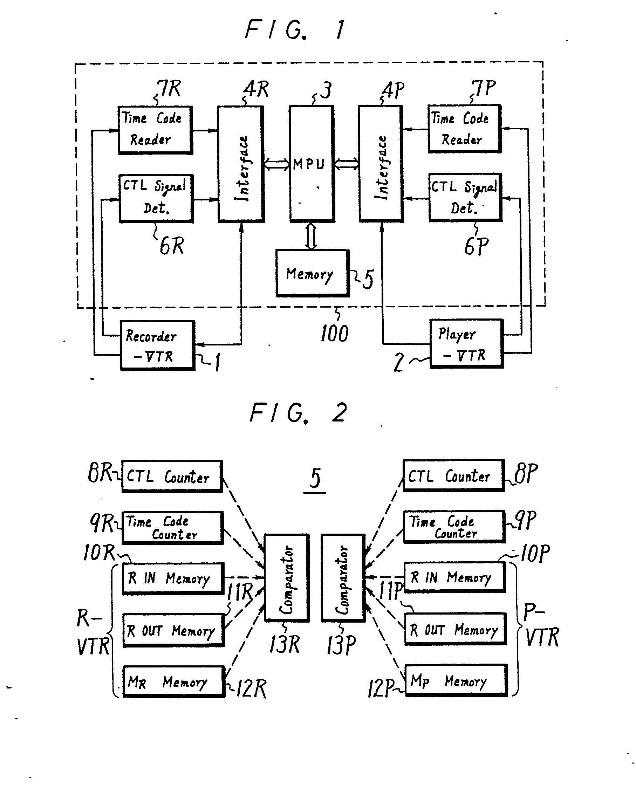

In Figure 1, an embodiment of editing control apparatus 100 according to the invention is shown connected to a first video tape recording and/or reproducing apparatus (recorder-VTR) 1 for recording on a video tape, and to a second video tape recording and/or reproducing apparatus (player-VTR) 2 for playing a video tape. In the embodiment, the recorder-VTR 1 is used with a tape having a video signal which is to be added to the other tape. The editing control apparatus 100 includes a microprocessor unit (MPU) 3 which is connected to the recorder-VTR 1 and the player-VTR 2 through interfaces 4R and 4P, respectively. A memory 5 is also connected to the MPU 3 and includes a register, a counter, a read only memory (ROM) including a stored program for controlling the operation of the editing control apparatus 100, and a random access memory (RAM) used for the execution of the program.

Control signal readers 6R and 6P detect control signals (sometimes referred to as "CTL signals") recorded on the tapes employed with the recorder-VTR 1 and the player-VTR 2 and generate output signals in response thereto which are supplied to the MPU 3 through the interfaces 4R and 4P, respectively. The MPU 3 supplies output signals in response thereto to the memory 5 for counting, as will be explained more fully below.

Time code readers 7R and 7P detect time code signals from the recorder-VTR 1 and the player-VTR 2 and supply output signals to the MPU 3 through the interfaces 4R and 4P. The time code signals from the MPU 3 are also supplied to the memory 5 for counting, as more fully described below.

The editing control apparatus 100 performs an editing operation in response to time code signals and control signals under the control of a program stored in the memory 5 and executed by the MPU 3. Figure 2 illustrates the allocation of memory space for the counters and memories in the RAM portion of the memory 5. The RAM portion of the memory 5 includes control signal counters 8R and 8P, and time code counters 9R and 9P associated with the recorder-VTR 1 and the player-VTR 2, respectively. The control signal counter 8R counts the control signals read by the control signal reader 6R, and the control signal counter 8P counts the control signals read by the control signal reader 6P. Time code signals from the recorder-VTR 1 are read by the time code reader 7R and supplied to the time code counter 9R whereby changes in the time code signals are detected and counted. Time code signals from the player-VTR 2 are read by the time code reader 7P and supplied to the time code counter 9P whereby changes in the time code signals are detected and counted.

The memory 5 includes portions for storing an editing start or "edit in" point and an editing end or "edit out" point for the tapes. With reference to Figure 2, the edit in point for the recorder-VTR 1 is stored in R IN memory 10R, and the edit out point is stored in R OUT memory 11R. The edit in point for the player-VTR 2 is stored in R-IN memory 10P, and the edit out point is stored in R OUT memory 11P. An $M_R$ memory 12R is associated with the recorder-VTR 1 and stores a time code signal derived therefrom under control of the MPU 3. An $M_P$ memory 12P is associated with the player-VTR 2 and stores a time code signal derived therefrom under control of the MPU 3, as more fully explained below.

Comparators 13R and 13P are associated with the recorder-VTR 1 and the player VTR 2, respectively. The comparators 13R and 13P are used to identify points on the tapes such as the edit points or preroll points in response to data stored in the control signal counters 8R and 8P, the time code counters 9R and 9P, the R IN memories 10R and 10P, the R OUT memories 11R and 11P, the $M_R$ memory 12R, and the $M_P$ memory 12P. The recorder-VTR 1 and the player-VTR 2 are controlled in response to comparison by the comparators 13R and 13P.

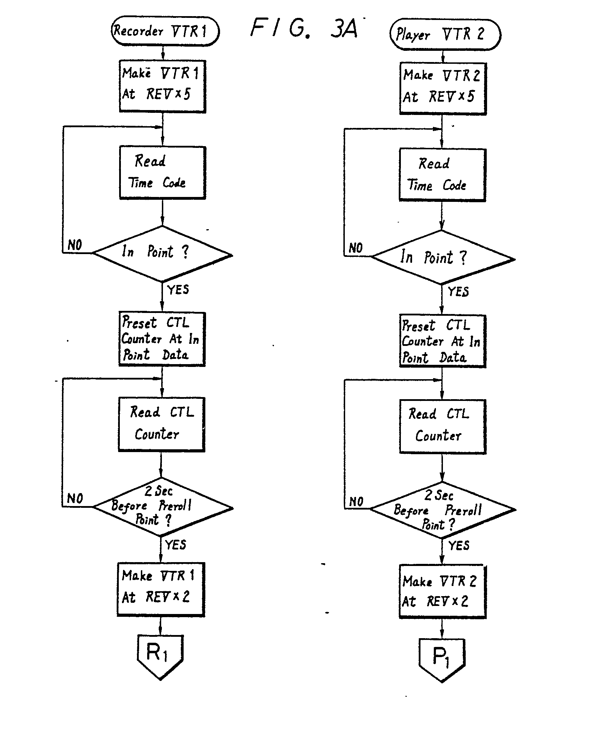

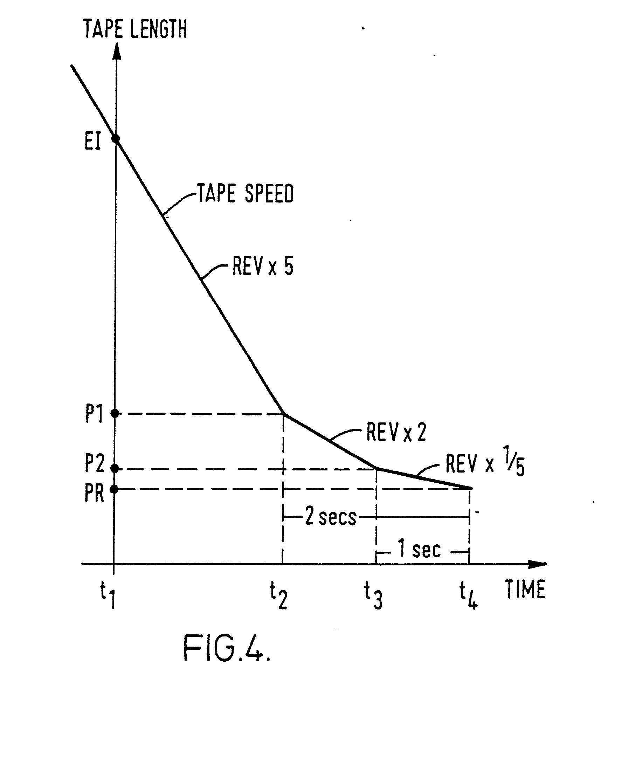

The operation of the embodiment of Figure 1 will next be described with reference to Figures 3A to 3E and the graph of Figure 4, in which the flow charts represent the steps of an example of a control program stored in the memory 5.

As illustrated in Figure 3A, the MPU 3 actuates the recorder-VTR 1 and the player-VTR 2 to rewind the tapes employed therewith at a first predetermined speed "REV×5" which, in the preferred embodiment, is five times faster than the normal recording and playback speed. The time codes recorded on the tapes are continously read by the time code readers 7R and 7P and tested against the time codes corresponding to respective predetermined edit in points EI, each referred to in Figure 3A as the "in point". When the time codes read by the time code readers 7R and 7P correspond to the edit in points EI, the control signal counters 8R and 8P are preset with the edit in point data in response thereto. The control signal counters 8R and 8P are thereafter tested to identify the points P1 on the tapes which are two seconds (at the normal recording and playback speed) before the preroll points PR located on the tapes. When time points $t_2$ (Figure

4) corresponding to two seconds before the preroll points PR are detected, the tapes on the recorder-VTR 1 and the player-VTR 2 are rewound at a second speed "REV×2", which, in the preferred embodiment, is twice the normal recording and playback speed.

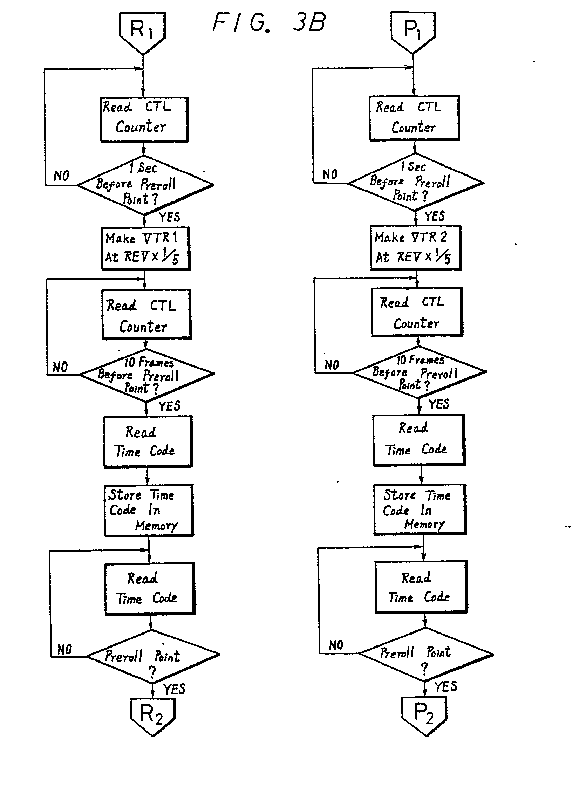

Referring to Figure 3B, the control signals counted by the control signal counters 8R and 8P are tested to identify the points P2 on the tapes which are one second (at the normal recording and playback speed) before the preroll points PR, indicated as time point $t_3$ in Figure 4. When the point P2 corresponding to time point $t_3$ is detected, the tapes on the recorder-VTR 1 and the player-VTR 2 are rewound at a third speed "REV×1/5", which, in the preferred embodiment, is one-fifth the normal recording and playback speed. The control signals counted by the control signal counters 8R and 8P continue to be tested to identify the points on the tapes which are ten frames before the preroll points PR. When the points on the tapes corresponding to ten frames before the preroll points PR are identified, the time code signals $M_R$ and $M_P$ corresponding thereto are read and stored in the $M_R$ memory 12R and the $M_P$ memory 12P, respectively. The time code signals recorded on the tapes are read by the time code readers 7R and 7P to determine whether the points being read on the tapes coincide with the preroll points PR.

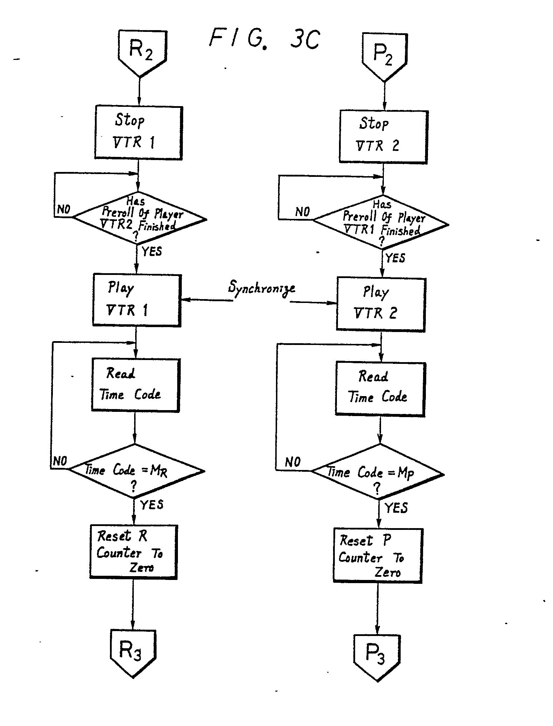

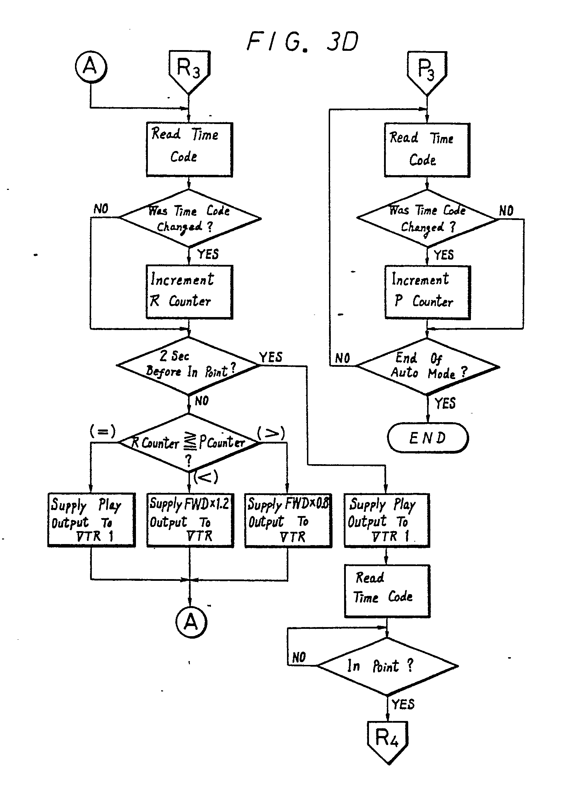

Referring to Figure 3C, when the preroll points PR on the tapes are reached, the recorder-VTR 1 and the player-VTR 2 are stopped. Since the tape speed is quite slow, in the preferred embodiment, one-fifth times as fast as the normal recording and playback speed, the recorder-VTR 1 and the player-VTR 2 can be accurately stopped at the preroll points PR. Once the recorder-VTR 1 and the player-VTR 2 are positioned at the preroll points PR, the recorder-VTR 1 and the player-VTR 2 are simultaneously placed into the play mode where the tapes are advanced in synchronism. The time code signals recorded on the tapes are read by the time code readers 7R and 7P and tested against the time code signals $M_R$ and $M_P$ stored in the $M_R$ memory 12R and the $M_P$ memory 12P, respectively. When the time code signals read from the tapes coincide with the time code signals $M_R$ and $M_P$ stored in the memories 12R and 12P, the time code counters 9R and 9P are reset to a predetermined number, which, in the preferred embodiment, is zero.

Referring to Figure 3D, the time code counters 9R and 9P are used to detect relative changes in the rates of occurrence of subsequently read time code signals. The numbers contained in the time code counters 9R and 9P are then compared with each other to determine whether they coincide. If the contents of the time code counters 9R and 9P do not coincide, the playback speed of the recorder-VTR 1 is adjusted to be faster or slower so that the contents of the time code counters 9R and 9P coincide. The adjustments to the tape speed of the recorder-VTR 1 are repeated until the tapes are synchronized. When the points on the video tapes corresponding to two seconds before the edit in points EI are identified, the tape speed of the recorder-VTR 1 is maintained as hereinbefore described. The time code reader 7R is actuated to read the time code signal to determine whether the tape in the recorder-VTR 1 is positioned at the edit in point EI.

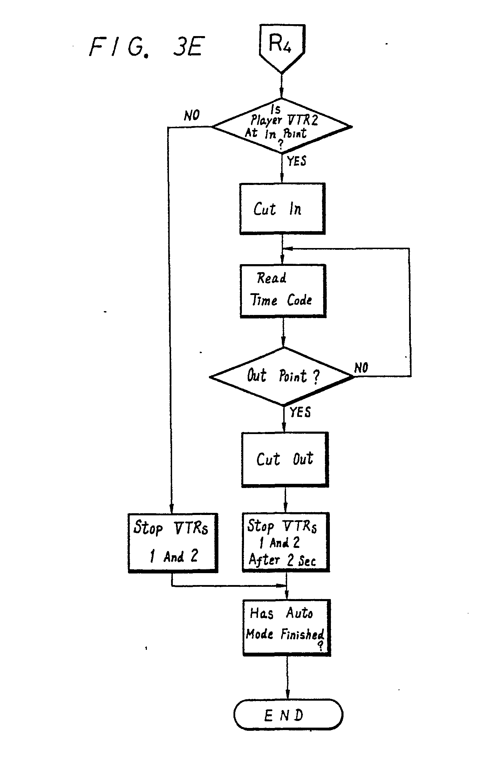

Referring to Figure 3E, the position of the tape on the player-VTR 2 is determined with respect to the edit in point EI when the tape on the recorder-VTR 1 is positioned at the edit in point EI. When the tapes of the recorder-VTR 1 and the player-VTR 2 are both positioned at the edit in points EI, the editing operation begins. Two seconds after the edit out points on the tapes have passed, the recorder-VTR 1 and the player-VTR 2 are stopped to complete the automatic editing operation.

If, however, the tape of the player-VTR 2 is not positioned at its edit in point EI when the tape on the recorder-VTR 1 is positioned at its edit in point EI, the VTRs 1 and 2 are stopped, since mis-editing would otherwise occur. The aforedescribed steps are then repeated so that the tape used with the player-VTR 2 is positioned at its edit in point EI at the same time that the tape used with the recorder-VTR 1 is positioned at its edit in point EI.

In the embodiment, data corresponding to time code signals are preset in the control signal counters 8R and 8P at the edit in point EI during preroll. The preroll is subsequently performed using the data stored therein so that even if the time code signals recorded on the video tapes are not consecutive, an accurate prerolling can be performed. The time code signals $M_R$ and $M_P$ are read just before the preroll point PR (in the preferred embodiment, ten frames before the preroll point PR) and stored in the memories 12R and 12P. The values of the time code signals stored in the memories 12R and 12P can thus accurately indicate the distances from the edit in points since the tape running direction is not changed nor are the pinch rollers intermittently engaged with the respective capstans during the period from the identifying of the edit in points EI to the reading of the time code signals $M_R$ and $M_P$. Accordingly, even if the time code signals are not consecutive on the tapes between the edit in points EI and the preroll points PR, an accurate editing can be performed.

The time code counters 9R and 9P accurately indicate the number of frames on the tapes before the edit in points EI because they contain the number of changes of the time code signals detected by the time code readers 7R and 7P. Accordingly, it is not important that the time code signals be consecutive to perform an accurate editing. In advancing the tapes to the edit in points EI from the preroll points PR, the contents of the time code counters 9R and 9P are reset to zero when the time code signals read by the time code readers 7R and 7P coincide with time code signals $M_R$ and $M_P$ stored in the memories 12R and 12P.

## Claims

1. An editing control apparatus (100) for use with first and second video tape recording and/or reproducing apparatuses (1, 2), each employing a video tape having time code signals and control signals recorded thereon, and which is advanced at a predetermined forward speed for recording and reproducing video signals thereon, the apparatus (100) comprising:

time code reading means (7R, 7P) for reading said time code signals on said video tapes;

control signal reading means (6R, 6P) for reading said control signals on said video tapes; and

controller means (3, 5) for controlling said video tape recording and/or reproducing apparatuses (1, 2) in response to said time code signals and said control signals, and for positioning said video tapes at respective preroll points (PR) which are located a predetermined number of frames from respective edit in points (EI);

characterized in that:

said controller means (3, 5) positions said video tapes at said respective preroll points (PR) by rewinding ($t_1$ to $t_2$) said video tapes at a first speed (REV×5) substantially greater than said predetermined forward speed to first predetermined points (P1) located between said edit in points (EI) and said preroll points (PR), and thereafter further rewinding ($t_3$ to $t_4$) the respective video tapes at a second speed (REV×1/5) substantially less than said predetermined forward speed to said respective preroll points (PR); and in that:

said controller means (3, 5) presets control signal counter means (8R, 8P) with a predetermined number for establishing said first predetermined points (P1) when said video tapes pass through said edit in points (EI) during said rewinding.

2. Apparatus according to claim 1 wherein said controller means (3, 5) rewinds ($t_2$ to $t_3$) said video tapes at an intermediate speed greater than said predetermined forward speed from said first predetermined points (P1) before said video tapes are further rewound ($t_3$ to $t_4$) at said second speed.

3. Apparatus according to claim 2 wherein said controller means (3, 5) changes said rewinding speeds of said video tapes in response to said control signals read by said control signal reading means (6R, 6P).

4. Apparatus according to claim 2 or claim 3 wherein said first speed is faster than said intermediate speed.

5. Apparatus according to claim 4 wherein said first speed is approximately five times as fast as said predetermined forward speed, said intermediate speed is approximately twice as fast as said predetermined forward speed, and said second speed is approximately one-fifth as fast as said predetermined forward speed.

6. Apparatus according to claim 1 wherein said controller means (3, 5) changes said rewinding speeds in response to said control signals counted by said contol signal counter means (8R, 8P) after said control signal counter means (8R, 8P) have been preset.

7. Apparatus according to claim 1 wherein said controller means (3, 5) actuates a memory (5) to store said time code signals read by said time code reading means (7R, 7P) when said video tapes are positioned at second predetermined points (P2) from which said video tapes are rewound at said second speed.

8. Apparatus according to claim 7 wherein said controller means (3, 5) resets time code counter means (9R, 9P) in response to comparisons by comparing means (13R, 13P) of said time code signals read by said time code reading means (7R, 7P) after said video tapes have been advanced in dependence on said time code signals stored in said memory (5).

9. Apparatus according to claim 8 wherein said controller means (3, 5) resets said time code counter means (9R, 9P) when said time code signals read by said time code reading means (7R, 7P) are the same as said time code signals stored in said memory (5).

10. Apparatus according to claim 9 wherein said time code counter means (9R, 9P) are reset to zero.

11. Apparatus according to claim 8, claim 9 or claim 10 wherein said time code counter means (9R, 9P) comprises first and second time code counters (9R, 9P) respectively associated with first and second video tape recording and/or reproducing apparatuses (1, 2).

12. Apparatus according to any one of claims 8 to 11 wherein said comparing means (13R, 13P) comprises first and second comparators (13R, 13P) respectively associated with first and second video tape recording and/or reproducing apparatuses (1, 2).

13. Apparatus according to any one of claims 7 to 12 wherein said memory means includes first and second memories (10R, 11R, 12R; 10P, 11P, 12P) respectively associated with first and second video tape recording and/or reproducing apparatuses (1, 2).

14. Apparatus according to any one of the preceding claims wherein said controller means (3, 5) comprises a microcomputer (3), and interface means (4R, 4P) connected between said time code reading means (7R, 7P), said control signal reading means (6R, 6P), nd said microcompter (3).

15. A method of operating first and second video tape recording and/or reproducing apparatuses (1, 2) to edit video tapes employed therewith and having time code signals and control signals recorded thereon, and in which in each of said tapes is advanced at a predetermined forward speed for recording and reproducing video signals thereon, the method comprising the steps of:

reading said time code signals on said video tapes;

reading said control signals on said video tapes;

controlling said video tape recording and/or reproducing apparatuses (1, 2) in response to said time code signals and said control signals; and

positioning said video tapes at respective preroll points (PR), which are located a predetermined number of frames from respective edit in points (EI);

characterized by:

rewinding said video tapes to first predetermined points (P1) located between said edit in points (EI) and said preroll points (PR) at a first speed substantially greater than said predetermined forward speed; and thereafter:

further rewinding said video tapes at a second speed substantially less than said predetermined forward speed to respective preroll points (PR) in response to said time code signals and said control signals; and

presetting control signal counter means (8R, 8P) with a predetermined number for establishing said first predetermined points (P1) when said video tapes pass through said edit in points (EI) during said rewinding.

16. A method according to claim 15 further comprising the step of rewinding said video tapes at an intermediate speed greater than said predetermined forward speed from said first predetermined points (P1) before further rewinding at said second speed.

17. A method according to claim 16 further comprising, during said rewinding, the step of counting said control signals after respective edit in points (EI) on said video tapes are read with reference to said time code signals for changing said rewinding speed of said video tapes.

18. A method according to claim 17 wherein said step of further rewinding at said second speed includes the step of positioning said video tapes at said preroll points (PR) in response to said reading of said time code signals.

19. A method according to claim 18 further comprising the steps of:

advancing said video tapes after said video tapes have been positioned at said preroll points (PR);

comparing said time code signals stored in a memory (5) during said rewinding at second predetermined points (P2) with said time code signals read from said video tapes during said advancing of said video tapes; and

counting said time code signals after said time code signals read from said video tapes are the same as said time code signals stored in said memory (5) for synchronizing said advancing of said video tapes.

20. A method according to claim 19 wherein said counting step includes the steps of:

comparing said time code signals counted from each of said video tapes; and

controlling said forward speed of at least one of said video tape recording and/or reproducing apparatuses in response to said time code signal count comparisons to synchronize said advancing of said video tapes.

**Patentansprüche**

1. Schnittsteuerungsgerät (100) zum Einsatz in Verbindung mit einem ersten und einem zweiten Video-Bandaufnahme- und/oder -wiedergabegerät (1, 2), in denen jeweils Videobänder mit aufgezeichneten Zeitkode- und Steuersignalen verwendet werden, die bei der Aufzeichnung und Wiedergabe von Videosignalen mit einer vorbestimmten Vorwärtsgeschwindigkeit transportiert werden,

mit einer Zeitkode-Leseeinrichtung (7R, 7P) zum Auslesen der auf den Videobändern aufgezeichneten Zeitkodesignale,

mit einer Steuersignal-Leseeinrichtung (6R, 6P) zum Auslesen auf den Videobändern aufgezeichneten Steuersignale,

sowie mit einer Steuereinrichtung (3, 5) zur Steuerung der Video-Bandaufnahme- und/oder -wiedergabegeräte (1, 2) nach Maßgabe der Zeitkodesiganle und der Steuersignale und zur Positionierung der Videobänder an jeweiligen Vorlaufpunkten (PR), die einen einer vorbestimmten Anzahl von Vollbildern entsprechenden Abstand von jeweiligen Editier-Anfangspunkten haben,

dadurch gekenzeichnet,

daß die Steuereinrichtung (3, 5) die Videobänder an den jeweiligen Vorlaufpunkten (PR) positioniert, indem sie sie mit einer ersten Geschwindigkeit (REV×5), die wesentlich größer ist als die genannte vorbestimmte Vorwärtsgeschwindigkeit, zu zwischen den genannten Editier-Anfangspunkten (EI) und den Vorlaufpunkten (PR) liegenden ersten vorbestimmten Punkten (P1) zurückspult ($t_1$ bis $t_2$), und danach die Videobänder mit einer zweiten Geschwindigkeit (REV×1/5), die wesentlich kleiner ist als die vorbestimmte Vorwärtsgeschwindigkeit, zu den jeweiligen Vorlaufpunkten (PR) zurückspult,

und daß die Steuereinrichtung (3, 5) zur Festlegung der ersten vorbestimmten Punkte (P1) Steuersignal-Zählmittel (8R, 8P) auf eine vorbestimmte Zahl voreinstellt, wenn die Videobänder während des Rückspulens über die Editier-Anfangspunkte (EI) laufen.

2. Gerät nach Anspruch 1, bei dem die Steuereinrichtung (3, 5) die Videobänder mit einer Zwischengeschwindigkeit, die größer ist als die vorbestimmte Vorwärtsgeschwindigkeit, von den ersten vorbestimmten Punkten (P1) zurückspult ($t_2$ bis $t_3$), bevor sie mit der genannten zweiten Geschwindigkeit weiter zurückgespult werden ($t_3$ bis $t_4$).

3. Gerät nach Anspruch 2, bei dem die Steuereinrichtung (3, 5) die Rückspulgeschwindigkeiten der Videobänder in Abhängigkeit von den mit Hilfe der Steuersignal-Leseeinrichtung (6R, 6P) ausgelesenen Steuersignalen ändert.

4. Gerät nach Anspruch 2 oder 3, bei dem die erste Geschwindigkeit größer ist die genannte Zwischengeschwindigkeit.

5. Gerät nach Anspruch 4, bei dem die erste Geschwindigkeit etwa fünfmal so groß ist wie die vorbestimmte Vorwärtsgeschwindigkeit, die Zwischengeschwindigket etwa zweimal so ist wie die vorbestimmte Vorwärtsgeschwindigkeit und die zweite Geschwindigkeit etwa ein fünftel mal so groß ist wie die vorbestimmte Vorwärtsgeschwindigkeit.

6. Gerät nach Anspruch 1, bei dem die Steuereinrichtung (3, 5) die Rückspulgeschwindigkeit in Abhängigkeit von den Steuersignalen ändert, die nach der Voreinstellung der Steuersignal-Zählmittel (8R, 8P) von diesen gezählt werden.

7. Gerät nach Anspruch 1, bei dem die Steuereinrichtung (3, 5) einen Speicher (5) zur Speicherung der von der Zeitkode-Leseeinrichtung (7R, 7P) ausgelesenen Zeitkodesignale aktiviert, wenn die Videobänder sich an zweiten vorbestimmten Punkten (P2) befinden, von denen aus sie mit der zweiten Geschwindigkeit weiter zurückgespult werden.

8. Gerät nach Anspruch 7, bei dem die Steuereinrichtung (3, 5) Zeitkode-Zählmittel in Abhängigkeit von Vergleichsvorgängen zurücksetzt, die von einer Vergleichereinrichtung (13R, 13P) zum Vergleichen der von der Zeitkode-Leseeinrichtung (7R, 7P) ausgelesenen Zeitkodesignalen durchgeführt werden, nachdem die Videobänder in Abhängigkeit von in dem Speicher (5) gespeicherten Zeitkodesignalen vorwärts bewegt wurden.

9. Gerät nach Anspruch 8, bei dem die Steuereinrichtung (3, 5) die Zeitkode-Zählmittel (9R, 9P) zurücksetzen, wenn die von der Zeitkode-Leseeinrichtung (7R, 7P) ausgelesenen Zeitkodesignale mit den in dem Speicher (5) gespeicherten Zeitkodesignalen übereinstimmen.

10. Gerät nach Anspruch 9, bei dem die Zeitkode-Zählmittel (9R, 9P) auf Null zurückgesetzt werden.

11. Gerät nach Anspruch 8, 9 oder 10, bei dem die Zeitkode-Zählmittel (9R, 9P) einen ersten und einen zweiten Zeitkodezähler (9R, 9P) umfassen, die dem ersten bzw. dem zweiten Video-Bandaufnahme- und/oder -wiedergabegerät (1, 2) zugeordnet sind.

12. Gerät nach einem der Ansprüche (8 bis 11), bei dem die Vergleichereinrichtung (13R, 13P) einen ersten und einen zweiten Komparator (13R, 13P) umfaßt, die dem ersten bzw. zweiten Video-Bandaufnahme- und/oder -wiedergabegerät (1, 2) zugeordnet sind.

13. Gerät nach einem der Ansprüche 7 bis 9, bei dem die Speichereinrichtung einen ersten und einen zweiten Speicher (10R, 11R, 12R; 10P, 11P, 12P) umfaßt, die dem ersten bzw. zweiten Video-Bandaufnahme- und/oder -wiedergabegerät (1, 2) zugeordnet sind.

14. Gerät nach einem der vorgehenden Ansprüche, bei dem die Steuereinrichtung (3, 5) einen Mikrocomputer (3) sowie eine Schnittstelleneinrichtung (4R, 4P) umfaßt, die zwischen der Zeitkode-Leseeinrichtung (7R, 7P) der Steuersignal-Leseeinrichtung (6R, 6P) und dem Mikrocomputer (3) angeordnet ist.

15. Verfahren zum Betreiben eines ersten und eines zweiten Video-Bandaufnahme- und/oder -wiedergabegerät (1, 2) für das Schneiden (Editieren) von in diesen verwendeten Videobändern, auf denen Zeitkodesignale und Steuersignale aufgezeichnet sind, wobei jedes diese Videobänder bei der Aufzeichnung und der Wiedergabe von Videosignalen mit einer vorbestimmten Vorwärtsgeschwindigkeit vorbewegt wird, mit folgenden Verfahrensschritten:

Auslesen der auf den Videobändern aufgezeichneten Zeitkodesignale,

Auslesen der auf den Videobändern aufgezeichneten Steuersignale,

Steuern der Video-Bandaufnahme- und/oder -wiedergabegeräte (1, 2) nach Maßgabe der Zeitkodesignale und der Steuersignale, und

Positionieren der Videobänder an jeweiligen Vorlaufpunkten (PR), die einen einer vorbestimmten Anzahl von Vollbildern entsprechenden Abstand von jeweiligen Editier-Anfangspunkten (EI) haben,

gekennzeichnet durch die Verfahrensschritte,

daß die Videobänder mit einer ersten Geschwindigkeit, die wesentlich größer ist als die genannte vorbestimmte Vorwärtsgeschwindigkeit, zu zwischen den genannten Editier-Anfangspunkten (EI) und den Vorlaufpunkten (PR) liegenden ersten vorbestimmten-Punkten (P1) zurückgespult werden,

daß danach die Videobänder in Abhängigkeit von den Zeitkodesignalen und den Steuersignalen mit einer zweiten Geschwindigkeit, die wesentlich kleiner ist als die vorbestimmte Vorwärtsgeschwindigkeit, zu den jeweiligen Vorlaufpunkten (PR) weiter zurückgespult werden, und

daß zur Festlegung der ersten vorbestimmten Punkte (P1) Steuersignal-Zählmittel (8R, 8P) auf einen vorbestimmte Zahl voreingestellt werden, wenn die Videobänder während des Rückspulens über die Editier-Anfangspunkte (EI) laufen.

16. Verfahren nach Anspruch 15 mit dem weiteren Verfahrensschritt, daß die Videobänder mit einer Zwischengeschwindigkeit, die größer ist als die vorbestimmte Vorwärtsgeschwindigkeit, von den ersten vorbestimmten Punkten (P1) zurückgespult werden, bevor sie mit der genannten zweiten Geschwindigkeit weiter zurückgespult werden.

17. Verfahren nach Anspruch 16 mit dem weiteren Verfahrensschritt, daß während der Rückspulens nach dem Auslesen der betreffenden Editier-Anfangspunkte (EI) auf den Videobändern die Steuersignale unter Bezug auf die Zeitkodesignale gezählt werden, um die Rückspulgeschwindigkeit der Videobänder zu ändern.

18. Verfahren nach Anspruch 17, bei dem der Verfahrensschritt des weiteren Zurückspulens mit der zweiten Geschwindigkeit den Schritt beinhaltet, daß die Videobänder in Abhängigkeit von dem Auslesen der Zeitkodesignale an den Vorlaufpunkten (PR) positioniert werden.

19. Verfahren nach Anspruch 18 mit dem weiteren Verfahrensschritten.

daß die Videobänder nach ihrer Positionierung an den Vorlaufpunkten (PR) vorbewegt werden,

daß die während des Zurückspulens an zweiten vorbestimmten Punkten (P2) in einem Speicher (5) gespeicherten Zeitkodesignale mit den Zeitkodesignalen verglichen werden, die während der Vorbewegung der Videobänder ausgelesen werden, und

daß die nach Gleichstand der von den Videobändern ausgelesenen Zeitkodesignale mit den in dem Speicher (5) gespeicherten Zeitkodesignalen die Zeitkodesignale abgezählt werden, um die Vorbewegung der Videobänder zu synchronisieren.

20. Verfahren nach Anspruch 19, bei dem der Verfahrensschritt des Abzählens der Zeitkodesignale folgende Schritte umfaßt:

Vergleichen der abgezählten Zeitkodesignale von jedem der Videobänder, und

Steuern der Vorwärtsgeschwindigkeit wenigstens eines der Video-Bandaufnahme- und/oder -wiedergabegeräte in Abhängigkeit von den Zeitkodesignal-Zählstandsvergleichen, um die Vorbewegung der Videobänder zu synchronisieren.

**Revendications**

1. Appareil de commande de montage (100) destiné à être utilisé avec un premier et un deuxième appareil d'enregistrement et, ou bien, de reproduction de bande vidéo (1, 2) employant chacun une bande vidéo sur laquelle sont enregistrés des signaux de code temporel et des signaux de commande, et que l'on fait avancer à une vitesse de défilement avant prédéterminée pour l'enregistrement et la reproduction de signaux vidéo, l'appareil (100) comprenant:

des moyens de lecture de code temporel (7R, 7P) servant à lire lesdits signaux de code temporel sur lesdites bandes vidéo;

des moyens de lecture de signal de commande (6R, 6P) servant à lire lesdits signaux de commande sur lesdites bandes vidéo; et

un moyen de commande (3, 5) servant à commander lesdits appareils d'enregistrement et, ou bien, de reproduction de bande vidéo (1, 2) en réponse auxdits signaux de code temporel et auxdits signaux de commande et à positionner lesdites bandes vidéo en des points de pré-enroulement respectifs (PR) qui sont situés à un nombre prédétermine d'images complètes vis-à-vis de points d'entrée de montage respectifs (EI);

caractérisé en ce que:

ledit moyen de commande (3, 5) positionne lesdites bandes vidéo auxdits points de pré-enroulement respectifs (PR) en rebobinant ($t_1$ à $t_2$) lesdites bandes vidéo à une première vitesse (REV×5) sensiblement plus grande que ladite vitesse prédéterminée de défilement avant jusqu'en des premiers points prédéterminés (P1) situés entre lesdits points d'entrée de montage (EI) et lesdits points de préenroulement (PR), et, après cela, en continuant de rebobiner ($t_3$ à $t_4$) les bandes vidéo respectives à une deuxième vitesse (REV×1/5) sensiblement inférieure à ladite vitesse prédéterminée de défilement avant jusqu'auxdits points de pré-enroulement respectifs (PR); et ledit moyen de commande (3, 5) prépositionne des moyens compteurs de signal de commande (8R, 8P) à l'aide d'un nombre prédéterminé afin d'établir lesdits premiers points prédéterminés (P1) lorsque lesdites bandes vidéo passent par lesdits points d'entrée de montage (EI) pendant ledit rebobinage.

2. Appareil selon la revendication 1, où ledit moyen de commande (3, 5) rebobine ($t_2$ à $t_3$) lesdites bandes vidéo à une vitesse intermédiaire, supérieure à ladite vitesse prédéterminée de défilement avant, à partir desdits premiers points prédéterminés (P1) avant que lesdites bandes vidéo continuent d'être rebobinées ($t_3$ à $t_4$) à ladite deuxième vitesse.

3. Appareil selon la revendication 2, où ledit moyen de commande (3, 5) modifie lesdites vitesses de rebobinage desdites bandes vidéo en réponse auxdits signaux de commande lus par lesdits moyens de lecture de signal de commande (6R, 6P).

4. Appareil selon la revendication 2 ou 3, où ladite première vitesse est plus grande que ladite vitesse intermédiaire.

5. Appareil selon la revendication 4, où ladite première vitesse est environ cinq fois plus grande que ladite vitesse prédéterminée de défilement avant, ladite vitesse intermédiaire étant environ deux fois plus grande que ladite vitesse prédéterminée de défilement avant, et ladite deuxième vitesse vaut environ un cinquième de ladite vitesse prédéterminée de défilement avant.

6. Appareil selon la revendication 1, où ledit moyen de commande (3, 5) modified lesdites vitesses de rebobinage en réponse auxdits signaux de commande comptés par lesdits moyens compteurs de signal de commande (8R, 8P) après que lesdits moyens compteurs de signal de commande (8R, 8P) ont été prépositionnés.

7. Appareil selon la revendication 1, où ledit moyen de commande (3, 5) active une mémoire (5) afin d'emmagasiner lesdits signaux de code temporel lus par lesdits moyens de lecture de code temporel (7R, 7P) lorsque lesdites bandes vidéo sont positionnées en des deuxièmes points prédéterminés (P2) à partir desquels lesdites bandes vidéo sont rebobinées à ladite deuxième vitesse.

8. Appareil selon la revendication 7, où ledit moyen de commande (3, 5) repositionne des moyens compteurs de code temporel (9R, 9P) en réponse à des comparaisons effectuées par des moyens de comparaison (13R, 13P) desdits signaux de code temporel lus par lesdits moyens de lecture de code temporel (7R, 7P) après que lesdites bandes vidéo ont été avancées en fonction desdits signaux de code temporel emmagasinés dans ladite mémoire (5).

9. Appareil selon la revendication 8, où ledit moyen de commande (3, 5) repositionne lesdits moyens compteurs de code temporel (9R, 9P) lorsque lesdits signaux de code temporel lus par lesdits moyens de lecture de code temporel (7R, 7P) sont identiques auxdits signaux de code temporel emmagasinés dans ladite mémoire (5).

10. Appareil selon la revendication 9, où lesdits moyens compteurs de code temporel (9R, 9P) sont repositionnés à zéro.

11. Appareil selon la revendication 8, 9 ou 10, où lesdits moyens compteurs de code temporel (9R, 9P) comprennent un premier et un deuxième compteur de code temporel (9R, 9P) respectivement associés aux premier et deuxième appareils d'enregistrement et, ou bien, de reproduction de bande vidéo (1, 2).

12. Appareil selon l'une quelconque des revendications 8 à 11, où lesdits moyens de comparaison (13R, 13P) comprennent un premier et un deuxième comparateur (13R, 13P) respectivement associés aux premier et deuxième appareils d'enregistrement et, ou bien, de reproduction de bande vidéo (1, 2).

13. Appareil selon l'une quelconque des revendications 7 à 12, où ledit moyen de mémoire comporte une première et une deuxième mémoire (10R, 11R, 12R; 10P, 11P, 12P) respectivement associées aux premier et deuxième appareils d'enregistrement et, ou bien, de reproduction de bande vidéo (1, 2).

14. Appareil selon l'une quelconque des revendications précédentes, où ledit moyen de commande (3, 5) comprend un microcalculateur (3) et des moyens d'interface (4R, 4P) connectés entre lesdits moyens de lecture de code temporel (7R, 7P), lesdits moyens de lecture de signal de commande (6R, 6P) et ledit microcalculateur (3).

15. Procédé de mise en oeuvre d'un premier et d'un deuxième appareil de reproduction et, ou bien, d'enregistrement de bande vidéo (1, 2) afin d'effectuer le montage de bandes vidéo employées avec ceux-ci et sur lesquelles sont enregistrés des signaux de code temporel et des signaux de commande, et dans lesquels chacune desdites bandes avance à une vitesse de défilement avant prédéterminée pour enregistrer et reproduire des signaux vidéo, le procédé comprenant les opérations suivantes:

lire lesdits signaux de code temporel sur lesdites bandes vidéo;

lire lesdits signaux de commande sur lesdites bandes vidéo;

commander lesdits appareils d'enregistrement et, ou bien, de reproduction de bande vidéo (1, 2) en réponse auxdits signaux de code temporel et auxdits signaux de commande; et

positionner lesdites bandes vidéo en des points de pré-enroulement respectifs (PR) qui sont situés à un nombre prédéterminé d'images complètes vis-à-vis de points d'entrée de montage respectifs (EI);

caractérisé par les opérations suivantes:

rebobiner lesdites bandes vidéo jusqu'en des premiers points prédéterminés (P1) situés entre lesdits points d'entrée de montage (EI) et lesdits points de pré-enroulement (PR) à une première vitesse sensiblement supérieure à ladite vitesse prédéterminée de défilement avant; et

continuer ensuite à rebobiner lesdites bandes vidéo à une deuxième vitesse sensiblement inférieure à ladite vitesse prédéterminée de défile-

ment avant jusqu'en des points de pré-enroulement respectifs (PR) en réponse auxdits signaux de code temporel et auxdits signaux de commande; et

prépositionner des moyens compteurs de signal de commande (8R, 8P) à l'aide d'un nombre prédéterminé afin d'établir lesdits premiers points prédéterminés (P1) lorsque lesdites bandes vidéo passent par lesdits points d'entrée de montage (EI) pendant ledit rebobinage.

16. Procédé selon la revendication 15, comprenant en outre l'opération consistant à rebobiner lesdites bandes vidéo à une vitesse intermédiaire, supérieure à ladite vitesse prédéterminée de défilement avant, depuis lesdits premiers points prédéterminés (P1) avant de continuer à rebobiner à ladite deuxième vitesse.

17. Procédé selon la revendication 16, comprenant en outre, pendant ledit rebobinage, l'opération consistant à compter lesdits signaux de commande après que les points d'entrée de montage respectifs (EI) se trouvant sur lesdites bandes vidéo ont été lus en relation avec lesdits signaux de code temporel afin de modifier ladite vitesse de rebobinage desdites bandes vidéo.

18. Procédé selon la revendication 17, où ladite opération consistant à continuer de rebobiner à ladite deuxième vitesse comprend l'opération consistant à positionner lesdites bandes vidéo sur lesdits points de pré-enroulement (PR) en réponse à ladite lecture desdits signaux de code temporel.

19. Procédé selon la revendication 18, comprenant en outre les opérations suivantes:

faire avancer lesdites bandes vidéo après que lesdites bandes vidéo ont été positionnées sur lesdits points de pré-enroulement (PR);

comparer lesdits signaux de code temporel emmagasinés dans une mémoire (5) pendant ledit rebobinage en des deuxièmes points prédéterminés (P2) avec lesdits signaux de code temporel lus sur lesdites bandes vidéo pendant ladite avance desdites bandes vidéo; et

compter lesdits signaux de code temporel après que lesdits signaux de code temporel lus sur lesdites bandes vidéo sont devenus identiques auxdits signaux de code temporel emmagasinés dans ladite mémoire (5) afin de synchroniser ladite avance desdites bandes vidéo.

20. Procédé selon la revendication 19, où ladite opération de comptage comporte les opérations suivantes:

comparer lesdits signaux de code temporel comptés dans chacune desdites bandes vidéo; et commander ladite vitesse de défilement avant d'au moins un desdits appareils d'enregistrement et, ou bien, de reproduction de bande vidéo en réponse auxdites comparaison des comptages des signaux de code temporel afin de synchroniser ladite avance desdites bandes vidéo.

FIG. 1

FIG. 2

1

EP 0 077 692 B1

F I G. 3A

```
( Recorder VTR 1 )                    ( Player VTR 2 )
        |                                     |
        v                                     v
  +-------------+                       +-------------+
  | Make VTR 1  |                       | Make VTR 2  |
  | At REV x 5  |                       | At REV x 5  |
  +-------------+                       +-------------+
        |                                     |
        v                                     v
  +-------------+                       +-------------+
  |   Read      |                       |   Read      |
  | Time Code   |                       | Time Code   |
  +-------------+                       +-------------+
        |                                     |
        v                                     v
  NO  /         \                     NO  /         \
<----<  In Point ?  >               <----<  In Point ?  >
      \         /                         \         /
           | YES                               | YES
           v                                   v
  +-------------+                       +-------------+
  | Preset CTL  |                       | Preset CTL  |
  | Counter At In|                      | Counter At In|
  | Point Data  |                       | Point Data  |
  +-------------+                       +-------------+
           |                                   |
           v                                   v
  +-------------+                       +-------------+
  | Read CTL    |                       | Read CTL    |
  | Counter     |                       | Counter     |
  +-------------+                       +-------------+
           |                                   |
           v                                   v
  NO   /  2 Sec  \                    NO   /  2 Sec  \
<----< Before Preroll >             <----< Before Preroll >
       \  Point ? /                        \  Point ? /
           | YES                               | YES
           v                                   v
  +-------------+                       +-------------+
  | Make VTR 1  |                       | Make VTR 2  |
  | At REV x 2  |                       | At REV x 2  |
  +-------------+                       +-------------+
           |                                   |
           v                                   v
        ( R1 )                              ( P1 )
```

2

FIG. 3B

# FIG. 3C

# FIG. 3D

FIG. 3E

R₄

Is Player VTR2 At In Point ?

NO

YES

Cut In

Read Time Code

Out Point ?

NO

YES

Cut Out

Stop VTRs 1 And 2

Stop VTRs 1 And 2 After 2 Sec

Has Auto Mode Finished ?

END

FIG.4.